# EUROPEAN PATENT SPECIFICATION

(11) **EP 0 722 655 B1**
(45) Date of publication and mention of the grant of the patent: **18.10.2000**
(21) Application number: 96200039.4
(22) Date of filing: 09.01.1996
(51) Int. Cl.: A01G 9/10

(54) **A method for the manufacture and for the placing into trays of culture plugs**
Verfahren zur Herstellung von Erdballen und zu ihrer Einsetzung in eine Schale
Méthode pour la fabrication de mottes de culture et leur mise en plateau

(30) Priority: 23.01.1995 NL 9500110
(43) Date of publication of application: 24.07.1996
(73) Proprietor: Green Products B.V., 8263 AG Kampen (NL)
(72) Inventor: Patijn, Daniel F., NL-8051 AD Hattem (NL); Langezaal, Lucas E.M., NL-3818 WE Amersfoort (NL)
(74) Representative: Van Breda, Jacobus

(56) References cited:
- EP-A- 0 090 910
- WO-A-92/03914
- FR-A- 2 663 627
- NL-A- 9 200 033
- US-A- 3 661 682

## Description

The present invention relates to a method for the manufacture and for the placing into trays of culture plugs, wherein the individual culture plugs are formed from a continuous basic strand of culture material and subsequently placed into the tray.

Such a method and accompanying installation is already known from WO 92/03914. Herein loose culture material is drawn in by suction and compressed to a basic strand and wrapped with bio-degradable paper. This basic strand is conveyed to a cutting means with vertical action where it is cut into individual culture plugs, then caught in individual pots and via these pots placed into trays. Finally these trays containing the culture plugs are transported to the location where seeds or cuttings are inserted into the culture plugs. One of the disadvantages with this kind of manufacture of culture plugs is that with each cutting stroke of the vertically moving cutting means the basic strand feed has to be stopped in order to obtain a straight end face on the culture plug. Consequently, the production process is not continuous and the production of the culture plugs is not the most efficient. Export of the culture plugs forms another problem. During transport the culture plugs take up much room which, especially when exporting, involves high transportation costs. Moreover, during long transports the quality of the individual culture plugs deteriorates.

It is the object of the present invention to provide a method as mentioned in the preamble, which removes the disadvantages mentioned.

To achieve this goal, the method according to the invention is characterized in that first the basic strand is continuously cut into strands serving as semi-product, having a length of a few culture plugs and that subsequently these strands are cut into the individual culture plugs when they are placed in the trays.

The production of the semi-product is now a continuous one, without the need to constantly interrupt the supply of the loose culture material and the transport of the basic strand. Because the strands are several culture plugs long, relatively less cutting needs to be done with, for instance a rotating knife, and the culture material can be conveyed faster. This ensures a high production rate of strands.

The next step, cutting the strands serving as semi-product, into individual culture plugs and loading the trays may, if so desired, be carried out in another location. The strands are easier to handle and to transport than the separate culture plugs and take up less room during transport than the trays. Transporting the strands instead of the separate culture plugs saves the culture plugs from damage and from quickly drying out. This keeps the transport cost low and the quality of the individual plugs high.

An advantageous embodiment of the method according to the invention is one wherein the strand is positioned more or less perpendicular above the horizontal tray, and where the culture plug, immediately after being formed from the strand, is placed into an intended opening in the tray.

A preferred embodiment is one wherein the strands are placed next to each other in a row, and wherein from each row of strands a row of culture plugs is cut which are placed into a row of openings in the tray and wherein subsequently the tray and the row of strands are moved in relation to each other in order to position the next row of culture plugs. Proceeding from a row of strands corresponding in number with the row of openings in the tray, a high loading rate can be achieved.

The invention also relates to an installation for loading trays with culture plugs.

The installation according to the invention is characterized in that it is provided with at least one feed device for taking up strands having the length of a number of culture plugs, with at least one guide interacting with the feed device for transporting the strands, which guide is provided with a permanent guide part, which is positioned more of less vertically above a horizontally extending tray support for the support of a tray, and with a feed-through guide part movable to a vertical position until aligned with the permanent guide part, and with a loading position more of less horizontally aligned with the feed device with at least one cutting device for cutting each strand into individual culture plugs, whereby the cutting device is positioned between the guide and tghe tray support, with the cutting edge extending in substantially horizontal direction perpendicular to the guide.

A preferable embodiment of the installation according to the invention is one wherein the same is provided with a row of feed devices placed next to each other, and guides for simultaneously taking up or simultaneously transporting the strands. In this way a large number of strands can be processed per unit of time.

It is useful if the cutting device takes the form of a knife for simultaneous cutting of all the strands. In this way one cutting stroke can cut a number of strands simultaneously.

Finally, it is an advantage if the guide is provided with means for supplying compressed air for weighing down a strand. This moves the strands downward through the guide to butt up well with the preceding row of strands so that eventually all openings in the tray that are to be loaded are effectively loaded with culture plugs.

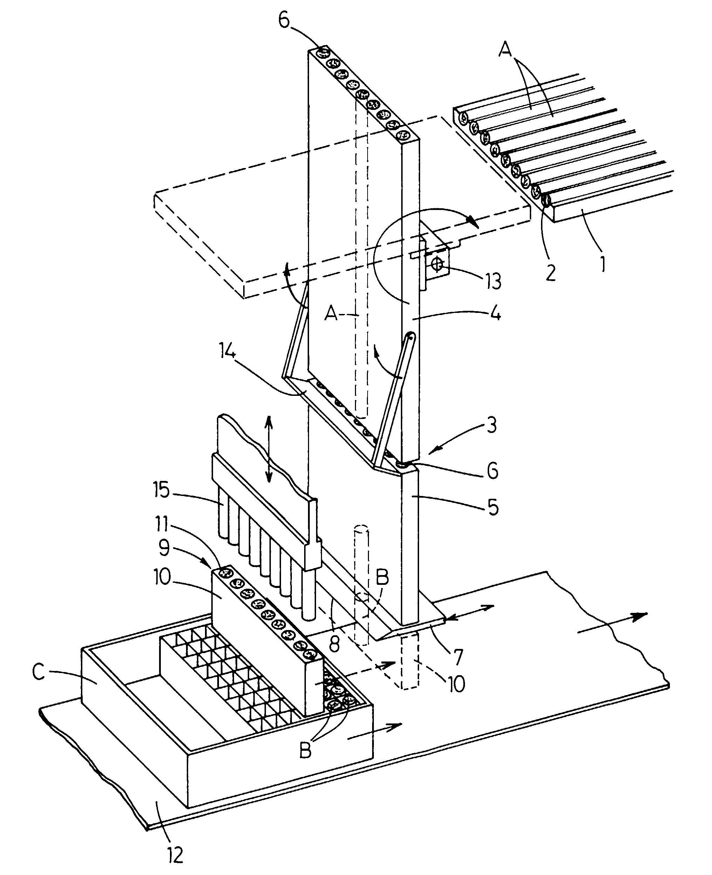

The invention will now be elucidated with the aid of the drawing which, very schematically, illustrates an embodiment of the installation according to the invention.

The Figure is a schematic and perspectivic view of an embodiment of the installation for the application of the method according to the invention.

In the embodiment shown in the Figure the installation according to the invention is provided with a feed device 1 extending virtually horizontally, for taking up strands A. The feed device 1 is constructed in the form of a table provided with a row of adjacent recesses 2. The installation is further provided with a guide 3 which comprises a movable guide part 4 and a permanent guide part 5. The separate, interacting guide parts 4,5 are placed above each other whereby, for clearness' sake, the distance between the two parts is somewhat enlarged in the drawing. The two guide parts 4,5 are equipped with a row of adjacent hollow tubes 6 and 6' respectively. As shown in the Figure, the tubes 6 and 6' are vertically aligned and have substantially the same diameter, which matches that of the strands A. A cutting means 7, with a cutting edge 8 is movable in an imaginary horizontal plane extending below and virtually perpendicular to the permanent guide part 5. Further, a movable positioning device 9 is provided which is composed of a bar 10 having a row of openings 11. A horizontally movable tray support 12 serves to support and to transport a tray C.

The installation for loading the trays with culture plugs according to the invention works as follows. A number of strands A is placed in a row next to each other into the openings 2 of the feed device 1. The strands A are a number of plugs B long and have been manufactured in a preceding step. The movable guide part 4 pivots around a point of rotation 13 in the direction indicated by the arrow whereby the loading position is virtually horizontally aligned with the feed device 1. This position is indicated in the Figure by a dash-line. Then the strands A are pushed into the hollow tubes 6 of the movable guide part 4. The movable guide part 4 then pivots around the point of rotation 13 to return into a vertical position whereby the feed-through position is aligned with the permanent guide part 5. The movable guide part 4 is provided with a swing aside bottom 14 which swings against the permanent guide part 5 as soon as the movable guide part 4 is aligned with the permanent guide part 5. The strands A can then be fed through into the tubes 6' in the permanent guide part 5. Optionally, compressed air may be used to ensure quick and reliable downward movement of the row of strands A. The cutting means 7, mounted below the permanent guide part 5, detains the strands A. As soon as the cutting means 7 moves away from the underside of the permanent guide part 5 in the direction indicated by the arrow, the strands A drop into the openings 11 of the bar 10. In the Figure, this position of the bar 10 is shown by a dash-line. The strands A are detained by checks (not shown) at the underside of the bar 10, serving as temporary supports. The cutting means 7 then returns in the direction of the guide part 5 and the cutting edge 8 cuts the individual culture plugs B off the strands A. The height of the bar 10 corresponds more or less with the required length of the culture plug B. The cutting means 7 blocks the feed-through of the remainder of the strands A, while the positioning device 9 moves horizontally as indicated, and is placed above the tray C provided with openings. Ejectors 15 which are vertically displaceable are then inserted into the openings 11 in the bar 10 and moved downward pushing the culture plugs B into the openings of the tray C. The diameter of the ejector 15 is somewhat smaller than that of the openings 11 in the bar 10. When the ejectors 15 are moved downward, the checks at the bottom of the bar 10 are, of course, temporarily removed. After having ejected the culture plugs B into the tray C the ejectors 15 move upward to above the positioning device 9. The positioning device 9 then returns to the starting position, while the openings 11 are aligned with the hollow tubes 6 and 6' of the guide 3. At the same time the tray C together with the tray support 12 is moved some distance by means of a transport device (not shown) in the direction of the permanent guide part 5. This distance corresponds with the width of the openings in tray C. The cutting means 7 can then again be moved away from the underside of the permanent guide part 5, in order to carry out another cutting stroke. Cutting and loading the tray C is repeated in the manner described. The permanent guide part 5 serves as a buffer for the almost completely cut strands A, while the movable guide part 4, which is in the meantime vacated, is again rotated to the loading position for a new supply of strands A.

The strands A may be fed into the feed device 1 and the tray C may be placed onto the tray support 12 either manually or automatically. Preferably the feed-through and cutting of the strands A and positioning the culture plugs B into the tray C is completely automated. In this way it takes little time for the culture plugs B to be cut and directly placed into the tray C.

The loading pattern in the tray C may be varied by, for instance, changing the way the strands A are fed into the feed device 1. The openings 2 may be alternately loaded and not loaded. The tray C can, for instance, also be moved up over two widths of tray openings, each time leaving one row of openings in the tray C empty.

If desired, the method of loading trays with culture plugs as described above, may be carried out in the same location as the cutting of the strands A from a continuous basic strand of culture material. The speed of manufacturing the strands A can then be optimally adapted to the speed of loading the trays with culture plugs.

From the above it will be clear that the invention provides a method for the manufacture and for the placing into trays of culture plugs and an accompanying installation, wherein a maximal production of culture plugs is realized and the quality of the individual culture plugs is high. In addition, the method according to the invention results in a high degree of flexibility, because the different steps of the method may, if desired, be carried out in different locations. The necessary transport of the strands from one location to the other is economical because the strands take up little space and are easy to handle.

The invention is not limited to the embodiments shown in the drawing and described in the foregoing, which may be varied in different ways without departing from the scope of the invention as specified in the appended claims. For instance, the diameters of the hollow tubes in the transport device and the openings in the positioning device may be varied, depending on the desired culture plug diameter. Also, the positioning device may be constructed as a row of vertically movable pins mounted at the bottom of the tray aiding the positioning of the culture plugs by protruding upward through the openings in the tray. These pins may also be used for cutting the culture plugs to the desired length.

## Claims

1. A method for the manufacture and for the placing into trays of culture plugs, wherein the individual culture plugs are formed from a continuous basic strand of culture material and subsequently placed into the tray, **characterized** in that first the basic strand is by continuous cutting made into strands (A) which are a few culture plugs (B) long and serve as semi-product and wherein these strands (A) are subsequently cut into the individual culture plugs (B) when they are placed in the trays (C).

2. A method according to claim 1, **characterized** in that the strand (A) is positioned more or less vertically above the tray (C) which extends horizontally, and that the culture plug (B), immediately after being formed from the strand (A), is placed into an opening in the tray (C).

3. A method according to claim 2, **characterized** in that the strands (A) are placed in a row next to each other, that from each row of strands (A) a row of culture plugs (B) is cut which are placed into a row of openings in the tray (C) and that subsequently the tray (C) and the row of strands (A) are moved in relation to each other in order to put the next row of culture plugs into position (B).

4. Installation for loading trays with culture plugs, **characterized** in that the same is provided with at least one feed device (1) for taking up strands (A) having the length of a number of culture plugs (B), with at least one guide (3) interacting with the feed device (1) for transporting the strands (A), which guide (3) is provided with a permanent guide part (5), which is positioned more or less vertically above a horizontally extending tray support (12) for the support of a tray (C), and with a feed-through guide part (4) movable to a vertical position until aligned with the permanent guide part (5), and with a loading position more or less horizontally aligned with the feed device (1), with at least one cutting device (7) for cutting each strand (A) into individual culture plugs (B), whereby the cutting device (7) is positioned between the guide (3) and the tray support (12), with the cutting edge (8) extending in substantially horizontal direction perpendicular to the guide (3).

5. Installation according to claim 4, **characterized** in that the same is provided with a row of feed devices (1) and guides (3) for simultaneously taking up or simultaneously transporting the strands (A).

6. Installation according to claim 4 or 5, **characterized** in that the feed device (1) is constructed as a substantially horizontal table equipped with at least one recess (2), and that the guide (3) is equipped with a hollow tube (6,6') having a diameter which matches that of the strand (A).

7. Installation according to any one of the claims 4-6, **characterized** in that a movable positioning device (9) is provided for placing the individual culture plugs (B) into the openings of the tray (C).

8. An installation according to claim 7, **characterized** in that the positioning device (9) comprises a bar (10) having a row of openings (11) which are provided with temporary supports, and a row of interacting ejectors (15) .

9. An installation according to claim 7, **characterized** in that the positioning device (9) is composed of a row of vertically movable pins mounted at the bottom of the tray and protruding upward through the openings in the tray (C) to aid positioning of the culture plugs (B)

10. An installation according to any one of the claims 4-9, **characterized** in that the guide (3) is provided with means for supplying compressed air for weighing down a strand (A).

11. An installation according to any one of the claims 4-10, **characterized** in that the tray support (12) is provided with a transport device for the step by step transportation of the tray (C).

12. An installation according to any one of the claims 4-11, **characterized** in that the cutting device (7) is a knife for simultaneously cutting all strands (A).

## Patentansprüche

1. Verfahren zur Herstellung und zum Einsetzen von Erdballen in Tröge, bei welchem die einzelnen Erdballen aus einem endlosen Hauptstrang von Kulturmaterial geformt und danach in den Trog eingesetzt werden,
dadurch **gekennzeichnet,**
dass zuerst der Hauptstrang durchgehend in Stränge (A) geschnitten wird, welche die Länge einiger Erdballen (B) aufweisen und als Halbfertigprodukt dienen, und dass diese Stränge (A) anschließend in die einzelnen Erdballen (B) geschnitten werden, wenn sie in die Tröge (C) eingesetzt werden.

2. Verfahren nach Anspruch 1,
dadurch **gekennzeichnet,**
dass der Strang (A) mehr oder weniger senkrecht über dem Trog (C) angeordnet wird, welcher horizontal liegt, und
dass der Erdballen (B), sofort nachdem er aus dem Strang (A) geformt wurde, in eine Öffnung im Trog (C) eingesetzt wird.

3. Verfahren nach Anspruch 2,
dadurch **gekennzeichnet,**
dass die Stränge (A) nebeneinander in einer Reihe angeordnet werden,
dass aus jeder Reihe von Strängen (A) eine Reihe von Erdballen (B) geschnitten wird, welche in eine Reihe von Öffnungen in den Trog (C) eingesetzt werden, und
dass anschließend der Trog (C) und die Reihe von Strängen (A) zueinander bewegt werden, um die nächste Reihe von Erdballen (B) in Position zu bringen.

4. Anordnung zum Befüllen von Trögen mit Erdballen,
dadurch **gekennzeichnet**:
dass sie versehen ist mit zumindest einer Zuführeinrichtung (1) zum Aufnehmen der Stränge (A) in der Länge von einer Anzahl von Erdballen (B), mit zumindest einer Führung (3), welche zum Transportieren der Stränge (A) mit der Zuführeinrichtung (1) zusammenwirkt, wobei die Führung (3) aufweist ein Dauerführungsteil (5), welches mehr oder weniger senkrecht über einem waagerecht sich erstreckendem Trogträger (12) zum Tragen eines Troges (C) angeordnet ist,
ein Durchführungs-Führungsteil (4), welches in eine senkrechte Position bewegbar ist, bis es zu dem Dauerführungsteil (5) ausgerichtet ist, und mit einer zur Zuführeinrichtung (1) mehr
oder weniger horizontal ausgerichteten Ladeposition, mit zumindest einer Trenneinrichtung (7) zum Trennen jedes Stranges (A) in einzeln Erdballen (B), wobei die Trenneinrichtung (7) zwischen der Führung (3) und dem Trogträger (12) angeordnet ist, wobei sich die im wesentlichen horizontal erstreckende Trennkante (8) senkrecht zur Führung (3) erstreckt.

5. Anordnung nach Anspruch 4,
dadurch **gekennzeichnet,** dass sie mit
einer Reihe von Zuführeinrichtungen (1) und Führungen (3) zur gleichzeitigen Aufnahme oder zum gleichzeitigen Transportieren der Stränge (A) versehen ist.

6. Anordnung nach Anspruch 4 oder 5,
dadurch **gekennzeichnet,**
dass die Zuführeinrichtung (1) als ein im wesentlichen horizontaler Tisch ausgebildet ist, der mit mindestens einer Ausnehmung (2) versehen ist, und
dass die Führung (3) mit einem hohlen Rohr (6, 6') mit einem Durchmesser, welcher jenem des Stranges (A) entspricht, ausgerüstet ist.

7. Anordnung nach einem der Ansprüche 4 bis 6,
dadurch **gekennzeichnet,**
dass eine verfahrbare Positioniereinrichtung (9) zum Einsetzen der einzelnen Erdballen (B) in die Öffnungen des Troges (C) vorgesehen ist.

8. Anordnung nach Anspruch 7,
dadurch **gekennzeichnet,**
dass die Positioniereinrichtung (9) eine Stange (10) mit einer Reihe von Öffnungen (11), welche mit Hilfsstützen versehen sind, und eine Reihe von zusammenwirkenden Auswerfern (15) aufweist.

9. Anordnung nach Anspruch 7,
dadurch **gekennzeichnet,**
dass die Positioniereinrichtung (9) aus einer Reihe von senkrecht verfahrbaren Stiften zusammengesetzt ist, die an dem Boden des Troges angebracht sind und nach oben durch die Öffnungen in der Schale (C) ragen, um die Positionierung der Erdballen (B) zu unterstützen.

10. Anordnung nach einem der Ansprüche 4 bis 9,
dadurch **gekennzeichnet,**
dass die Führung (3) mit Mitteln zur Zuleitung von Druckluft zum Herunterdrücken eines Stranges (A) versehen ist.

11. Anordnung nach einem der Ansprüche 4 bis 10,
dadurch **gekennzeichnet,**
dass der Trogträger (12) mit einer Transporteinrichtung für den schrittweisen Transport des Troges (C) versehen ist.

12. Anordnung nach einem der Ansprüche 4 bis 11,
dadurch **gekennzeichnet,**
dass die Trenneinrichtung (7) ein Messer zum gleichzeitigen Durchtrennen aller Stränge (A) ist.

## Revendications

1. Méthode pour la fabrication de mottes de culture et leur mise en plateau, dans lesquels chaque motte de culture est formée à partir d'un toron continu de base d'un matériau de culture, placé par la suite dans le plateau, caractérisée en ce que le toron de base est d'abord partagé, par découpage continu, en torons (A) qui ont une longueur équivalente à quelques mottes de culture (B) et qui sont utilisés comme produits intermédiaires, et dans laquelle ces torons (A) sont ensuite découpés de façon à former chacun des mottes de culture (B) lorsqu'ils sont placés dans les plateaux C).

2. Méthode suivant la revendication 1, caractérisée en ce que le toron (A) est disposé plus ou moins verticalement au-dessus du plateau (C), qui s'étend horizontalement, et en ce que la motte de culture (B), immédiatement après avoir été formée à partir du toron (A), est placée dans une ouverture du plateau (C).

3. Méthode suivant la revendication 2, caractérisée en ce que les torons (A) sont placés dans une rangée les uns à côté des autres, qu'à partir de chaque rangée de torons (A) on découpe une rangée de mottes de cultures (B) qui sont placées dans une rangée d'ouvertures du plateau (C), et qu'ensuite le plateau (C) et la rangée de torons (A) sont déplacés de façon liée de façon à placer la rangée suivante de mottes de culture dans la position (B).

4. Installation pour charger des plateaux avec des mottes de culture, caractérisée en ce qu'elle comporte au moins un dispositif de remplissage (1) pour soulever les torons (A) qui ont la longueur de plusieurs mottes de culture (B), au moins un guide (3) fonctionnant en interaction avec le dispositif de remplissage (1) pour transporter les torons (A), ledit guide (3) étant pourvu d'une pièce (5) de guidage permanent, disposé plus ou moins verticalement au-dessus d'un support de plateau (12) s'étendant horizontalement et assurant le support d'un plateau (C), et une pièce (4) de guidage en traversée déplaçable vers une position verticale jusqu'à être alignée avec la pièce de guidage permanent (5), et qui présente une position de chargement plus ou moins horizontalement alignée avec le dispositif de chargement (1), avec au moins un dispositif de découpe (7) pour découper chaque toron (A) en mottes de culture individuelles (B), de façon que le dispositif de découpe (7) soit placé entre le guide (3) et le support de plateau (12), le bord de découpage (8) s'étendant dans une direction sensiblement horizontale perpendiculaire au guide (3).

5. Installation suivant la revendication 4, caractérisée en ce qu'elle comprend une rangée de dispositifs de chargement (1) et des guides (3) pour soulever simultanément ou transporter simultanément les torons (A).

6. Installation suivant la revendication 4 ou 5, caractérisée en ce que le dispositif de chargement (1) est construit comme une table sensiblement horizontale équipée d'au moins un évidement (2), et que le guide (3) est équipé d'un tube creux (6, 6') présentant un diamètre adapté à celui du toron (A).

7. Installation suivant l'une quelconque des revendications 4 à 6, caractérisée en ce qu'un dispositif mobile de positionnement (9) est prévu pour placer les mottes de culture individuelles (B) dans les ouvertures du plateau (C).

8. Installation suivant la revendication 7, caractérisée en ce que le dispositif de positionnement (9) comprend une barre (10) présentant une rangée d'ouvertures (11) pourvues de supports temporaires, et une rangée d'éjecteurs (15) fonctionnant en interaction.

9. Installation suivant la revendication 7, caractérisée en ce que le dispositif de positionnement (9) est constitué d'une rangée de broches mobiles verticalement, montées dans le fond du plateau et faisant saillie vers le haut à travers les ouvertures du plateau (C) pour faciliter le positionnement des mottes de culture (B).

10. Installation suivant l'une quelconque des revendications 4 à 9, caractérisée en ce que le guide (3) comporte des moyens pour délivrer de l'air comprimé et éjecter un toron (A) vers le bas.

11. Installation suivant l'une quelconque des revendications 4 à 10, caractérisée en ce que le support de plateau (12) comporte un dispositif de déplacement pour le déplacement pas-à-pas du plateau (C).

12. Installation suivant l'une quelconque des revendications 4 à 11, caractérisée en ce que le dispositif de découpe (7) est un couteau pour le découpage simultané de tous les torons (A).
